# EUROPÄISCHE PATENTSCHRIFT

(11) **EP 1 608 521 B1**
(45) Veröffentlichungstag und Bekanntmachung des Hinweises auf die Patenterteilung: **01.08.2007**
(21) Anmeldenummer: 04724013.0
(22) Anmeldetag: 29.03.2004
(51) Int. Cl.: B60G 17/052

(54) **DEZENTRALE GESCHLOSSENE NIVEAUREGELEINRICHTUNG FÜR KRAFTFAHRZEUGE**
DECENTRALIZED, CLOSED LEVEL REGULATING DEVICE FOR MOTOR VEHICLES
DISPOSITIF DE REGULATION DE NIVEAU FERME DECENTRALISE POUR VEHICULES AUTOMOBILES

(30) Priorität: 31.03.2003 DE 10314570
(43) Veröffentlichungstag der Anmeldung: 28.12.2005
(73) Patentinhaber: BF Consulting GmbH, 82538 Geretsried (DE)
(72) Erfinder: GUDZULIC, Miro, 83512 Wasserburg (DE)
(74) Vertreter: Fischer, Matthias
(86) Internationale Anmeldenummer: PCT/EP2004/003325
(87) Internationale Veröffentlichungsnummer: WO 2004/087445

(56) Entgegenhaltungen:
- EP-A- 1 243 447
- WO-A-03/008249
- DE-C- 19 959 556
- US-A- 5 466 007
- US-A- 5 467 595

## Beschreibung

Die Erfindung betrifft eine Luftfederungsanlage für ein Fahrzeug, mit mindestens einer Luftfeder pro Rad an mindestens einer Fahrzeugachse, einer Energieeinheit, einer Speichereinheit, mindestens einer Regeleinheit in dem Federbein und einer, diese Aggregate verbindenden Schaltung, wobei die Druckseite der Pumpe mit einer Speichereinheit verbunden ist.

Eine derartige Luftfederung ist aus der DE 199 59 556 C1 bekannt. Es handelt sich um eine geschlossene Niveauregeleinrichtung, bei der alle Druckmittelkammern über ein Ventil entlüftet werden und der Lufttrockner sich vor dem Kompressor befindet. Durch die Integration des Lufttrockners in die Niveauregelanlage ist weitgehend sichergestellt, daß sich in der Niveauregelanlage entfeuchtete Luft befindet, so daß die Bestandteile der Niveauregelanlage vor Korrosion und Vereisung geschützt sind. Nachteilig ist jedoch, daß bei dieser Anlage der Lufttrockner direkt der Atmosphäre zugewandt ist, so daß ständig Luftfeuchtigkeit aufgenommen wird. Dies kann unter Umständen dazu führen, daß der Lufttrockner seine Funktion nicht oder nicht ausreichend erfüllt.

Aus der EP 1 243 447 A2 ist eine Niveauregelanlage bekannt, die mehrere Kompressoren aufweist, wobei jeder Kompressor für sich mit der Druckmittelkammer verbunden ist. Somit ist nicht mehr ein einziger Kompressor für die gesamte Anlage mit allen Druckmittelkammern zuständig, sondern ein einzelner Kompressor hat jeweils nur eine einzige Druckmittelkammer zu versorgen. Mehrere Kompressoren können gleichzeitig den Druckmittelkammern Luft zuführen oder Luft aus den Druckmittelkammern abziehen.

Es ist jedoch festzustellen, daß bei der aus der oben genannten Druckschrift bekannten Niveauregelanlage eine aufwendige Kompressoranlage mit bis zu vier 2/2-Wegeventilen benötigt wird. Die Kompressoren verbrauchen viel Strom, ebenso die Steuerventile. Aufgrund der beträchlichen Baugröße des Kompressors mit dazugehörigen Ventilen ist es schwierig, sämtliche Bauteile direkt in der Druckmittelkammer unterzubringen.

Aus der EP 1 243 447 A2 ist eine geschlossene Niveauregelanlage für Fahrzeuge bekannt, mit einem Lufttrockner, der in einer Druckluftleitung angeordnet ist, über die der Kompressorausgang mit dem Druckluftvorratsbehälter verbindbar ist. Über ein Ansaugventil kann Luft aus der Atmosphäre über dem Kompressor und Lufttrockner in den Druckluftbehälter überführt werden.

Aus der WO 03/008 249 A2 ist eine Druckluftanordnung für Sattelschlepper bekannt, mit einer Regeleinheit, welche ein Druckhalteventil, einen Drucksensor, einen Höhensensor und eine Busstation als Einheit aufweist.

Der Erfindung liegt die Aufgabe zu Grunde, eine geschlossene Niveauregelanlage zu schaffen, die bei einem hohem Wirkungsgrad einen einfachen Aufbau aufweist, einen vergleichsweise niedrigen Energieverbrauch hat, ein dezentrales Ventilregelmodul und kleines Bauvolumen hat und gleichzeitig für höhere Drucke und größere Druckluftleitungen ausgelegt ist.

Die Aufgabe wird gelöst mit einer Niveauregelanlage gemäß Anspruch 1. Die erfindungsgemäße Anlage läßt sich besonders vorteilhaft nicht nur bei Personenfahrzeugen, sondern auch bei Geländefahrzeugen (SUV) sowie leichten LKW-Transporter-Fahrzeugen einsetzen. Durch größere Ventilnennweiten und direkt gesteuerte Ventile, die in das Federbein bzw. die Druckmittelkammer eingebaut werden, wird nach wie vor schnelles Be- bzw. Entlüften erreicht. Mit dem Einsatz *einer* Energieleitung werden erhebliche Montage- und Installationskosten gespart. Durch die Kombination mit der Regeleinheit, dem Speicher und dem Speicherventil sind Nennweiten von 4mm mit dem Druckhalteventil erreichbar. Ein besonderer Vorteil bei der Erfindung ist auch darin zu sehen, daß der Lufttrockner in einer Druckluftleitung der Niveauregelanlage angeordnet ist und zumindest durch Ansaugventil, Kompressor und Rückschlagventil vollständig von der Atmosphäre abgeschirmt wird. Somit besteht keine Gefahr mehr, daß der Lufttrockner ständig Luftfeuchtigkeit aus der Atmosphäre aufnimmt. Durch Einbau des Lufttrockners hinter dem Kompressor erhöht sich Effektivität des Lufttrockners während des Trocknungsbetriebes.

Ein weiterer Vorteil der Erfindung ergibt sich durch den Einbau der Regeleinheit direkt an die Druckmittelkammer. Dadurch werden schnelle Be- und Entlüftungszeiten der Druckmittelkammer erreicht.

Dadurch daß eine Verbindung der Regeleinheiten mit dem Speicherventil, mit regelbarem Druck gewählt ist, werden Magnetspulen mit wenig Leistung benötigt. Die Druckluft vom Speicherventil leistet eine Servounterstützung. Durch Einbau einer Busstation in die Regeleinheit sowie den Einsatz einer Energieleitung vom Speicherventil zu den einzelnen Regeleinheiten wird der Verdrahtungsaufwand verringert. Weitere Vorteile der Erfindung ergeben sich durch die Befüllung des Druckluftspeichers aus der Atmosphäre durch Einschalten von Ansaugventil und Kompressor allein. Die vorteilhafte Anordnung des Druckluftspeichers hinter dem Lufttrockner das Befüllen der Druckluftkammer aus dem Druckluftspeicher ermöglicht. Damit wird vermieden, daß der Kompressor bei stehendem Fahrzeug oder bei niedriger Geschwindigkeit eingeschaltet werden muß. Durch Einbau eines Höhensensors direkt in die Regeleinheit bzw. in die Druckmittelkammer entfallen aufwendiges Justieren und Nachjustieren des Sensorhebels und des Niveausensors. Weitere Vorteile ergeben sich durch die Integration eines Druckbegrenzungsventils in dem Umschaltventil und dem Speicherventil.

Zum besseren Verständnis der Erfindung wird diese anhand eines Ausführungsbeispiels mit Hilfe der Zeichnung kurz erläutert.
- Fig. 1: zeigt ein Schaltbild einer erfindungsgemäßen Niveauregelanlage in schematischer Darstellung.
- Fig. 2: zeigt eine Niveauregelanlage die weitestgehend der in Fig.1 gezeigten Anlage entspricht. Bei der Niveauregelanlage gemäß Fig. 2 ist das in Fig. 1 gezeigte Regelmodul 1 in ein Regelmodul 1a mit direkt in der Druckmittelkammer angeordnetem Pilot- und entsperrbarem Rückschlagventil umgewandelt.
- Fig. 3: zeigt schematisch im Längs- und Querschnitt dargestellt eine Energieleitung zur Verwendung in der erfindungsgemäßen Anlage.
- Fig. 4: zeigt ein Schaltbild einer erfindungsgemäßen Niveauregelanlage in schematischer Darstellung. Bei der Niveauregelanlage gemäß Fig. 4 ist das in Fig. 1 gezeigte Regelmodul 1 durch ein Regelmodul 1b ersetzt, wobei eine von der Druckmittelkammer ausgehende Druckmittelleitung über ein direkt gesteuertes 2/2 Resthalteventil über eine Energieleitung mit dem Druckluftspeicher verbunden ist.

Im Folgenden werden bei der Beschreibung einiger Ausführungsbeispiele der erfindungsgemäßen Anlage verschiedene Bedienungsweisen und Schaltvorgänge der Anlage erläutert. Gleiche Vorrichtungen und Bauteile tragen dabei gleiche Bezugszeichen.

### 1. Erste Ausführungsform:

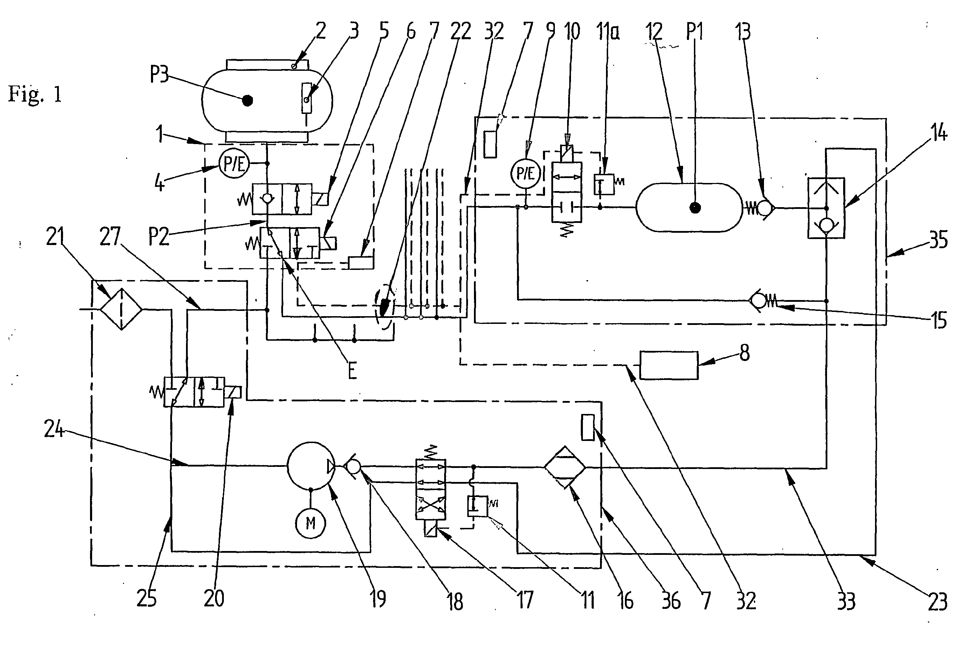

Die in Fig. 1 gezeigte Niveauregelanlage besteht aus drei Baugruppen:

Eine erste Baugruppe "Energieeinheit 36" besteht aus einem Kompressor 19, einem Drucklufttrockner 16, einem Umschaltventil 17, einem Ansaugventil 20, einem Ansaugfilter 21, einem Rückschlagventil 18 mit Verbindungen und einer Busstation 7 und einem Umschaltventil 17 mit Druckbegrenzungsventil 11. Alle diese Bauteile sind zu einer Einheit zusammenmontiert.

Eine zweite Baugruppe "Speichereinheit 35" besteht aus einem Druckluftspeicher 12, einem Speicherventil 10 mit einem Druckbegrenzungsventil 11a, einem Drucksensor 9, Rückschlagventilen 13 und 15, einem Wechselventil 14 und einer Busstation 7.

Eine dritte Baugruppe "Regeleinheit 1" besteht aus einem 3/2-Wege-Steuerventil 6, einem Druckhalteventil 5, einem Drucksensor 4, einem Höhensensor 3 und einer Busstation 7.

In Fig.1 ist nur *eine* Regeleinheit 1 mit einer Druckmittelkammer 2 angezeigt. Abhängig von der Anzahl der Fahrzeugräder bzw. Druckmittelkammern 2 wird eine entsprechende Anzahl von Regeleinheiten 1 in der Niveauregelanlage eingesetzt. Die Spulenleistung des Umschaltventils 17 und des Speicherventils 10 wird dadurch niedrig gehalten, daß man durch ein fest eingestelltes Druckbegrenzungsventil 11 externe Steuerhilfsluft für die Magnetspulen bereitstellt.

### 1.1 Druckluftspeicher füllen:

Beim ersten Befüllen des Druckluftspeichers 12 werden ein Steuerventil 20 und der Kompressor 19 eingeschaltet. Die Luft wird über einen Filter 21 angesaugt und in dem Kompressor 19 verdichtet und über das Rückschlagventil 18, das Umschaltventil 17, den Drucklufttrockner 16, das Wechselventil 14 und das Rückschlagventil 13 in den Druckluftspeicher 12 transportiert. Zur Befüllung des Druckluftspeichers 12, werden nur das Steuerventil 20 und der Kompressor 19 eingeschaltet. Die Befüllung einer Druckmittelkammer 2 ist nur über den Druckluftspeicher 12 möglich. Das bedeutet, daß bei stehendem Kraftfahrzeug oder bei niedriger Geschwindigkeit kein Kompressor eingeschaltet werden muß. Dadurch werden störende Geräusche vermieden.

Fertigt man nun ein Luftfederbein mit einer Druckmittelkammer 2 und einer Regeleinheit 1 als integrierte Einheit, so ist es möglich, das Luftfederbein bzw. die Druckmittelkammer 2 mit Druckluft zu füllen und die Einheit gefüllt zum Fahrzeughersteller zu transportieren.

### 1.2 Fahrzeug heben:

Beim Einschalten des Speicherventils 10 strömt Luft aus dem Druckluftbehälter 12 zur Regeleinheit 1. Wenn in der Druckmittelkammer 2 der Druck P3 niedriger als der Druck P1 im Druckluftspeicher 12 ist, strömt die Druckluft aus dem Druckluftspeicher 12 in die Druckmittelkammer 2, ohne daß ein Druckhalteventil 5 eingeschaltet wird. Hierbei läßt sich wertvolle Energie sparen. Beim Heben des Fahrzeugs wird das Druckhalteventil 5 eingeschaltet, und die Druckmittelkammer 2 wird mit Druckluft gefüllt. Wenn die vorgegebene Fahrzeughöhe erreicht ist, wird über einen Höhensensor 3 die Fahrzeugposition an die elektronische Steuerung 8 gemeldet. Dann werden das Druckhalteventil 5 und das Speicherventil 10 abgeschaltet. Beim Befüllen des Kompressors 19 (z. B. bei zu niedrigem Druck im Druckluftspeicher 12) werden das Steuerventil 20 und der Kompressor 19 eingeschaltet, so daß die Druckluft aus der Umgebung über den Ansaugfilter 21 angesaugt wird und durch den Trockner 16 in den Druckluftspeicher 12 transportiert wird. Der Befüllvorgang der Druckmittelkammer 2 wiederholt sich wie oben beschrieben.

Die Regeleinheit 1 besteht aus dem Druckhalteventil 5, dem Steuerventil 6, dem Drucksensor 4, dem Höhensensor 3 und der Busstation 7. Um den Stromverbrauch niedrig zu halten, wird über das Speicherventil 10 Druckluft unter den Sitz des Druckhalteventils 5 zugeführt. Der Druck P2 wirkt unter dem Druckhalteventil 5, welches als Sitzventil ausgeführt ist. Damit werden vorteilhafterweise wesentlich kleinere Magnetspulen als bei üblichen Anlagen benötigt. Auf diese Weise sind für das Steuerventil 6 und das Druckhalteventil 5 Nennweiten von 4 mm problemlos zu erreichen.

Um auch beim Speicherventil 10 und beim Steuerventil 17 den Stromverbrauch zu minimieren, wird eine Alternative vorgeschlagen. Da beide Ventile größere Nennweiten haben, um zu ermöglichen, gleichzeitig mehrere Druckmittelkammern 2 zu be- oder entlüften, werden beide Ventile als vorgesteuerte Ventile ausgeführt. Die Magnetspulen werden über ein Druckbegrenzungsventil 11 bzw. 11a mit einem fest eingestellten Druck versorgt (z. B. 6 bar). Bei dem Druckbegrenzungsventil handelt es sich vorteilhafterweise um eine einfache Ausführung mit fest eingestelltem Druck ohne eigenen Druckluftverbrauch. Besonders vorteilhaft ist bei niedrigeren Fahrzeuggeschwindigkeiten oder bei stehendem Fahrzeug eine Befüllung der Druckmittelkammer 2 aus dem Druckluftspeicher 12. Um störende Geräusche des laufenden Kompressors zu vermeiden, wird beim Befüllvorgang nur das Speicherventil 10 und das Restdruck-Halteventil 5 eingeschaltet. Beim Erreichen der gewünschten Fahrzeugposition werden wiederum beide Ventile 10 und 5 abgeschaltet (sind dann stromlos), und die Luftzufuhr zur Druckmittelkammer wird unterbrochen.

### 1.3 Fahrzeug auf Niveau halten:

Die "Haltestellung" wird durch die Grundschaltung erreicht. Das Speicherventil 10 und das Restdruck-Halteventil 5 werden durch eine Feder in Grundstellung gehalten (stromlos).

### 1.4 Fahrzeug senken:

Durch Einschalten des Speicherventils 10 und des Umschaltventils 17 herrscht in den Druckluftleitungen 22, 26, 33, 25 und 27 der Druck P2. Bei Einschalten des 3/2-Wege-Steuerventils 6, des Druckhalteventils 5 und Einschalten des Kompressors 19 strömt die Druckluft aus der Druckmittelkammer 2 über das Ansaugventil 20 zum Kompressor 19, über Rückschlagventil 18, Umschaltventil 17, Drucklufttrockner 16, Wechselventil 14 und Rückschlagventil 13 in den Druckluftspeicher 12.

Durch den eingestellten Druck P2 wird eine Servounterstützung für das Druckhalteventil erreicht, so daß man bei größeren Nennweiten mit kleineren Spulenleistungen auskommen kann.

Eine weitere Möglichkeit, den Luftdruck in der Druckmittelkammer 2 beim Fahrzeug zu senken erreicht man durch Einschalten des Druckhalteventils 5, des Umschaltventils 17 und des Kompressers 19. Die Druckluft strömt dann aus der Druckmittelkammer 2 über das Steuerventil 6, das Rückschlagventil 15, den Drucklufttrockner 16, das bestromte Umschaltventil 17 und die Druckluftleitungen 25 und 24 zum Eingang des Kompressors 19. Über den Kompressor 19 wird die Druckluft via Rückschlagventil 18, Umschaltventil 17, Druckluftleitung 23, Wechselventil 14 und Rückschlagventil 13 in den Druckluftspeicher 12 geleitet.

### 1.5 Drucklufttrocknerspülung:

Die Erfindung gewährleistet, daß die angesaugte Druckluft aus der Umgebung nur über den Drucklufttrockner 16 in die Niveauregelanlage gelangen kann. Der Drucklufttrockner 16 in Einkammerausführung benötigt eine Druckluft-Rückspülung. Durch Einschalten des Druckhalteventils 5 strömt die Druckluft aus der Druckmittelkammer 2 über das Rückschlagventil 15, das eingeschaltete Umschaltventil 17 und das Ansaugventil 20 Über den Ansaugfilter 21 ins Freie.

### 1.6 Luftfederbein, Transport:

Die Luftfederbeine werden meistens separat montiert und danach zur Fahrzeugmontage an einen anderen Ort transportiert. Während des Transports und nach der Montage sind die Federbeine mit Druckluft befüllt. Die Befüllung der Federbeine mit Druckluft geschieht über die Regeleinheit 1. Nach Druckabfrage über den Drucksensor 4 kann jeder beliebige Druck eingestellt werden. Die Regeleinheit 1 ersetzt damit vorteilhafterweise ein zusätzliches Restdruck-Halteventil.

### 2. Zweite Ausführungsform:

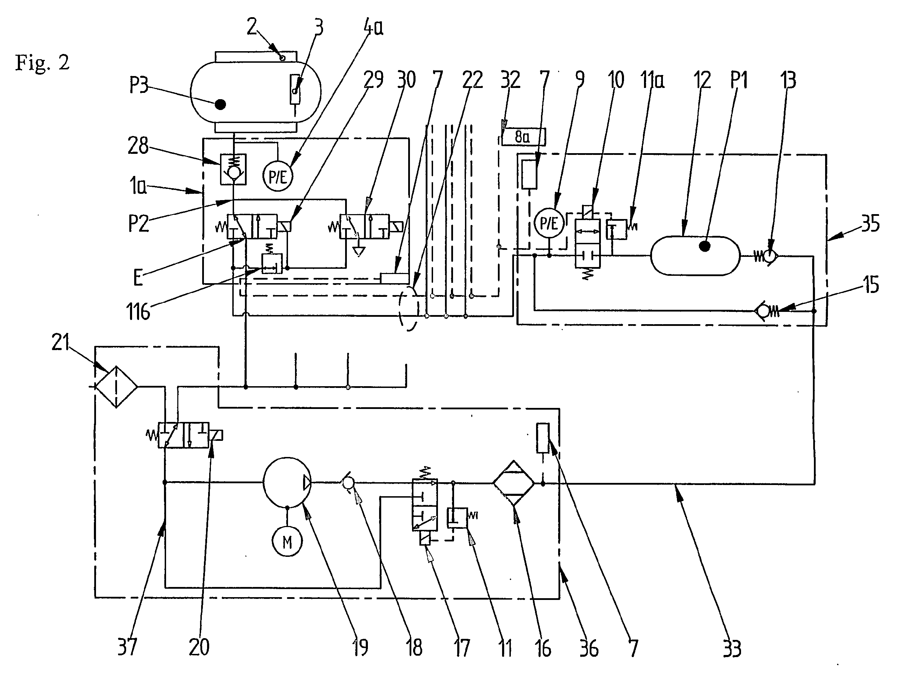

Fig. 2 zeigt eine Niveauregelanlage, die weitestgehend der in Fig. 1 gezeigten Anlage entspricht. Bei der Niveauregelanlage gemäß Fig. 2 ist das in der Fig. 1 gezeigte Regelmodul 1 durch ein Regelmodul 1a ersetzt.

Aus dem Druckluftspeicher 12 wird die Druckluft über das Speicherventil 10 und die Energieleitung 22 bis zu einem Regelmodul 1a geführt. In der Grundstellung steht die Druckluft am Eingang des Hauptventils 29 an. Vor dem Ventileingang ist eine Abzweigung zum Druckbegrenzungsventil 11b vorgesehen, um das Hauptventil 29 mit Steuerhilfsluft und das Pilotventil 30 mit Druckluft zu versorgen.

Die Ausführung der Anlage gemäß Fig. 2 ist besonders vorteilhaft, wenn große Nennweiten bei Druckluftleitungen eingesetzt werden solle, wie z.B. bei LKW, Schienenfahrzeugen oder überhaupt bei der Steuerung von Druckmittelkammern (Balgzylindern) mit großen Volumen.

Durch den Einbau eines entsperrbaren Rückschlagventils 28 direkt in der Druckmittelkammer 2 wird eine besondere Abdichtung erreicht, da nur eine Dichtstelle vorliegt. Durch die Druckwirkung der Druckluft auf den (nicht gezeigten) Ventilsitz des entsperrbaren Rückschlagventils 28 erhöht sich die Dichtigkeit des ganzen Systems noch mehr.

Durch Einsatz des Speicherventils 10 und des Drucksensors 9 wird der Druck P2 zum 3/2-Wegeventil präziser geregelt. Der gleiche Druck herrscht auch in den Druckluftleitungen 26 und 33 bis zum Rückschlagventil 18. Aufgrund des einstellbaren Drucks wird eine schnelle Befüllung der Druckmittelkammer 2 ermöglicht, d. h. daß die Druckluftleitungen nicht immer von einem Luftdruckwert "Null" an befüllt werden müssen.

Bei einer Anordnung einer Anlage gemäß Fig. 2 sind Nennweiten für Druckluftleitungen und Querschnitte bei den Hauptventilen, dem entsperrbarem Rückschlagventil 28, Hauptventil 29, Speicherventil 10, Umschaltventil 17 und Steuerventil 20 auch bis 15 mm erreichbar.

### 2.1 Fahrzeug heben:

Bei Einschalten des Speicherventils 10, des Hauptventils 29 und des Pilotventils 30 wird das entsperrbare Rückschlagventil 28 entriegelt, und die Druckluft strömt aus dem Druckluftspeicher 12 in die Druckmittelkammer 2. Bei Erreichen der gewünschten Fahrzeughöhe, welche über einen Höhensensor 3 festgestellt wird, wird vom Höhensensor 3 ein Steuersignal an eine elektronische Steuerung 8a geleitet. Von der elektronischen Steuerung 8a werden Steuersignale über eine Elektroleitung 32 und eine Energieleitung 22 an die Ventile 10, 29 und 30 geleitet, um diese abzuschalten. Damit ergibt sich wieder die Grundstellung, die in Fig. 2 gezeigt ist.

### 2.2 Fahrzeug senken:

Durch Einschalten des Pilotventils 30 wird das entsperrbare Rückschlagventil 28 entsperrt, so daß die Druckluft aus der Druckmittelkammer 2 über Hauptventil 29, Druckluftleitung 27 und Ansaugventil 20 zum Eingang des Kompressors 19 gelangt. Durch gleichzeitiges Einschalten des Kompressors 19 und des Pilotventils 30 wird die Druckluft über Rückschlagventil 18, Umschaltventil 17, Drucklufttrockner 16, Druckluftleitung 33, Wechselventil 14 und Rückschlagventil 13 in den Druckluftspeicher 12 transportiert.

### 2.3 Fahrzeug halten:

Bei ausgeschalteten Ventilen befindet sich das Fahrzeug in der Haltestellung.

### 3. Dritte Ausführungsform:

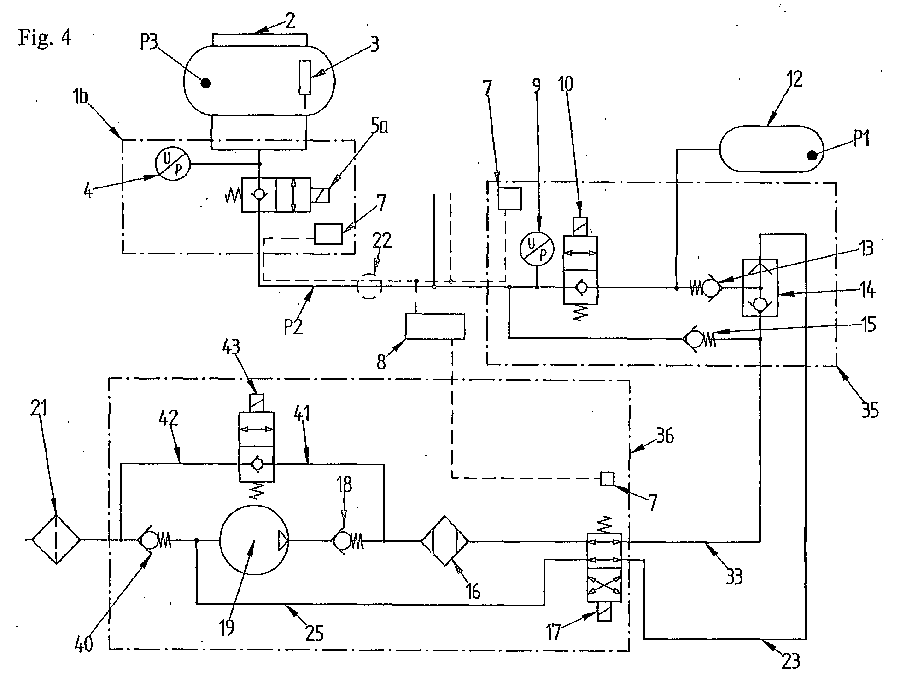

Fig. 4 zeigt eine weitere, dritte Ausführungsform der erfindungsgemäßen Niveauregelanlage, die weitestgehend der Fig. 1 dargestellten Anlage entspricht. Bei diesem, Ausführungsbeispiel ist das Regelmodul 1 durch ein Regelmodul 1b ersetzt, welches ein direkt in der Druckmittelkammer 2 angeordnetes 2/2-Druckhalteventil 5a aufweist. Mit dieser Anordnung wird die Entleerung der Druckmittelkammer 2 über den Drucklufttrockner durchgeführt.

Bei Niveauregelanlagen der eingangs genannten Art besteht das Bedüfnis, die Regelvorgänge möglichst schnell durchzuführen. Dies betrifft nicht nur Regelvorgänge während der Fahrt, sondern auch solche im Stillstand des Fahrzeugs oder bei der Fahrt mit geringer Geschwindigkeit. Dabei müssen oft große Höhenunterschiede bewältigt werden. So besteht bei relativ hoch gebauten Fahrzeugen, wie z. B. den sogenannten SUV (Sport ulility vehicles) der Wunsch, das Fahrzeug beim Anhalten abzusenken, um so ein bequemes Ein- und Aussteigen der Fahrgäste zu ermöglichen, und das Fahrzeug bei Fahrtantritt wieder auf eine für die Fahrt optimale Höhe zu heben. Bei herkömmlichen Niveauregelanlagen wird hierfür relativ viel Zeit benötigt, bis die Luft aus allen Druckmittelkammern abgezogen ist, sodass die Fahrgäste gezwungen sind, nach Anhalten des Fahrzeugs auf die Absenkung des Fahrzeugs zu warten. Geschlossene Niveauregelanlagen sind hier bereits gegenüber den offenen Systemen im Vorteil, bei denen die Luft nur langsam über den Lufttrockner abströmen kann. Derselbe Sachverhalt ist auch relevant für ein Fahrzeug, welches sich in einer Kurvenfahrt befindet. Durch die Zentrifugalkraft neigt sich ein Fahrzeug in der Kurve automatisch nach innen. Um das Fahrzeug wieder ins Niveau zu bringen, muss die Niveauregelanlage eine sehr schnelle Befüllung der Druckmittelkammern der inneren Fahrzeugsseite ermöglichen.

Die gemäß der dritten Ausführungsform vorgeschlagene erfinderische Lösung einer Niveauregelanlage schlägt beispielsweise ein direkt gesteuertes 2/2-Magnetventil, z. B. bis Nennweite 4, mit einem Arbeitsdruck von 16 bar und einer Spulenleistung unter 5 W vor. Durch einen ständig eingestellten Servodruck unter dem Resthalteventil 5a wird auch ein Druckausgleich erreicht. Somit wirkt der volle Druck der Druckmittelkammer 2 nicht ständig auf den Ventilsitz. Durch diese Erfindung wird mit Einsatz eines direkt gesteuerten 2/2-Resthalteventils eine enorme Vergrößerung der Flächensitzgröße gegenüber dem Stand der Technik erreicht.

Durch Einbau eines Rückschlagventils 40 zwischen Ansaugfilter 21 und Kompressor 19 wird eine geschlossene Niveauregelanlage erreicht.

Durch Einbau eines Umschaltventils 17 zwischen Trockner 16 und Speichereinheit 35 erreicht man einen ständig eingestellten Vordruck vom Rückschlagventil 18 bis zur Regeleinheit 1b.

Für die Spülung des Drucklufttrockners 16 ist zwischen den Druckluftleitungen 41 und 42 ein 2/2-Wegeventil 20a eingebaut. Dadurch wird es möglich, ein 2/2-Wegeventil 20a mit geringer Nennweite einzusetzen, welches aufgrund seiner geringen Spulenleistung weing Energie erfordert. Diese Anordnung macht es möglich, daß beim Füllen des Druckluftspeichers nur der Kompressor 19, jedoch kein Magnetventil eingeschaltet werden muß, was ebenso zur Energieeinsparung beiträgt. An dieser Stelle zeigt sich die vorteilhafte Ausgestaltung der erfindunggemäßen Anlage besonders. Trotz größerer Nennweiten und höherer Drükke wird kein einziges Magnetventil mehr als bei aus dem Stand der Technik bekannten Anlagen benötigt.

Zur Beschreibung der dritten Ausführungsform werden die Funktionsbestandteile, die mit den beiden zuvor beschriebenen Ausführungsformen identisch sind, an dieser Stelle nicht mehr wiederholt.

### 3.1 Luftspeicher füllen:

Bei der in Figur 4 gezeigten Niveauregelanlage wird der Druckluftspeicher 12 nur durch das Betreiben des Kompressors 19 gefüllt. Hierbei wird Luft über den Ansaugfilter 21 und das Rückschlagventil 40 aus der Umgebung angesaugt, im Kompressoer 19 verdichtet und über das Rückschlagventil 18, den Drucklufttrockner 16, das Umschaltventil 17, die Druckluftleitung 33 oder das Ventil 14 und das Rückschlagventil 13 in den Druckluftspeicher gefördert. Bei dieser Anordnung wird kein einziges Magnetventil benötigt, um Luft aus der Umgebung bis zum Druckluftspeicher 12 zu transportieren.

### 3.2 Fahrzeug heben:

Beim Anschalten des Speicherventils 10 strömt Luft aus dem Druckluftspeicher 12 zur Regeleinheit 1b. Wenn der Druck P3 der Druckmittelkammer 2 niedriger ist als der Druck P1 im Druckluftspeicher 12, strömt Druckluft aus dem Druckluftspeicher 12 in die Druckmittelkammer 2, ohne ein Druckhalteventil 5a einzuschalten. Hierbei lässt sich wertvolle Energie sparen. Beim Anheben des Fahrzeugs wird das Druckhalteventil 5a jedoch geschaltet und die Druckmittelkammer 2 wird mit Druckluft gefüllt.

Der Druck P2 wirkt auf das Druckhalteventil 5a. Hierfür werden vorteilhafterweise nur kleine Magnetspulen mit geringerer Spulenleistung benötigt. Ein Druckhalteventil 5a mit einer Nennweite von 4 mm erreicht diese Funktion problemlos.

### 3.3 Fahrzeug auf Niveau halten:

Bei der Ausführungsform gemäß Figur 4 wirkt bei dem Druckhalteventil 5a auch Druck aus der Druckmittelkammer 2 auf den Magnetanker. Dadurch wird der Dichtungsgrad der Druckmittelkammer erhöht. Durch stromlosen Zustand des Druckhalteventils 5a wird eine Haltestellung erreicht.

### 3.4. Fahrzeug senken:

Durch einen eingestellten Druck P2 erreicht man, dass das Druckhalteventil 5a eine Servounterstützung erfährt. Somit kann man bei größeren Nennweiten mit kleineren Spulenleistungen auskommen.

Durch Einschalten von Druckhalteventil 5a, Umschaltventil 17, Kompressor 19 strömt die Druckluft aus der Druckmittelkammer 2 über das Rückschlagventil 15, das bestromte Umschaltventil 17, den Drucklufttrockner 16, die Druckluftleitung 25, den Kompressor 19, über Rückschlagventil 18, Umschaltventil 17, Druckluftleitung 23, oder Ventil 14, Rückschlagventil 13 in den Druckluftspeicher 12. Das Fahrzeug senkt sich ab.

Liegt in der Druckmittelkammer 2 ein höherer Druck P3 als im Druckluftspeicher 12 (P1) an, strömt die Druckluft aus der Druckmittelkammer 2 über Speicherventil 10 in den Druckluftspeicher 12. Ist zwischen P3 und P2 ein Druckluftausgleich erreicht, läuft der selbe Vorgang ab wie anfangs beschrieben.

### 3.5 Drucklufttrocknerspülung:

Durch die Erfindung ist gewährleistet, dass die aus der Umgebung angesaugte Luft nur über den Drucklufttrockner 16 in die Niveauregelanlage gelangen kann. Der Drucklufttrockner 16 benötigt eine Spülung und kann mit der Druckluft aus den Druckmittelkammern 2 oder dem Druckluftspeicher 12 gespült werden. Bei der Spülung des Drucklufttrockners wird die Druckluft über die Druckluftleitung 33 zum Trockner 16 bis zum Rückschlagventil 18 zugeführt. Über das eingeschaltete Spülventil 43 strömt die Druckluft über die Druckluftleitungen 41 und 42 und einen Ansaugfilter 21 ins Freie.

### 3.6 Luftfilter beim Transport:

Bei Befüllung der Federbeine zum Transport mit Druckluft geschieht dies über die Regeleinheit 1b. Nach Druckabfrage über den Drucksensor 4 kann jeder beliebige Druck eingestellt werden. Die Regeleinheit 1b ersetzt ein zusätzliches Restdruckhalteventil.

### 3.7 Entlüftung der Niveauregelanlage:

Zur bedarfsweisen Entlüftung der Anlage werden das Resthalteventil 5a und das Spülventil 43 geschaltet, und über den Ansaugfilter 21 strömt die Druckluft ins Freie.

Beim Entlüften des Druckluftspeichers 12 wird zusätzlich das Speicherventil 10 geschaltet. Durch das Entlüften der Anlage wird der Drucklufttrockner 16 immer wieder regeneriert. Durch Verknüpfung des Druckhalteventils 5a und des Drucksensors 3 mit der Steuerung 8 ist es möglich, den Druck P3 in der Druckmittelkammer 2 unter minimalen Restdruck abzusenken.

### 4. Energieleitung:

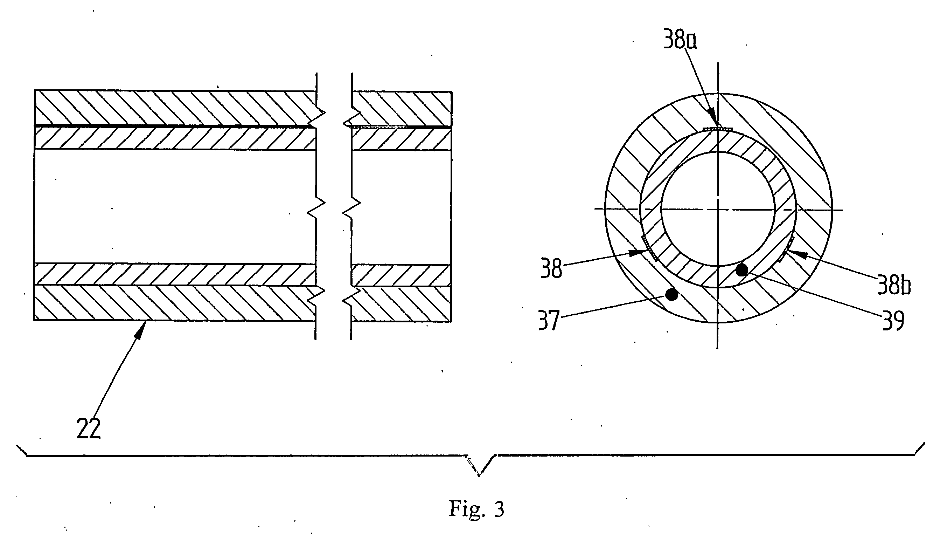

Fig. 3 zeigt eine Energieleitung zur Verwendung in der erfindungsgemäßen Anlage. Um die Installationskosten und den Verdrahtungsaufwand zu verringern, wird statt einzelner Druckmittelleitungen und einzelner elektrischer Kabel vorteilhafterweise eine Energieleitung 22 eingesetzt, die beispielhaft in Fig.3 dargestellt ist. Die Energieleitung 22 besteht aus einem Innenschlauch 39 und einem Außenschlauch 37, sowie wie in Fig. 3 dargestellter Weise angeordneten elektrischen Leitungen 38. Die Erfindung schlägt für die elektrischen Leitungen 38 eine leitfähige dünne Folie vor, um die erforderliche Flexibilität der Energieleitung zu gewährleisten. Über die elektrischen Leitungen 38, beispielsweise Folien, werden Strom- und Steuersignale von der elektronischen Steuerung 8 bzw. 8a zur Regeleinheit 1 bzw. 1a und umgekehrt übertragen.

### BEZUGSZEICHEN

- 1, 1a, 1b: Regeleinheit
- 2: Druckmittelkammer
- 3: Höhensenor
- 4: Drucksensor
- 5: Druckhalteventil
- 5a: 2/2-Druckhalteventil
- 6: Steuerventil
- 7: Busstation
- 8: elektronische Steuerung
- 9: Drucksensor
- 10: Speicherventil
- 11: Druckbegrenzungsventil
- 11a: Druckbegrenzungsventil
- 11b: Druckbegrenzungsventil
- 12: Druckluftspeicher
- 13: Rückschlagventil
- 14: Oderventil
- 15: Rückschlagventil
- 16: Drucklufttrockner
- 17: Umschaltventil
- 18: Rückschlagventil
- 19: Kompressor
- 20: Ansaugventil
- 21: Ansaugfilter
- 22: Energieleitung (Strom- und Druckluftleitung)
- 23: Druckluftleitung
- 24: Druckluftleitung
- 25: Druckluftleitung
- 26: Druckluftleitung
- 27: Druckluftleitung
- 28: entsperrbares Rückschlagventil
- 29: Hauptventil
- 30: Pilotventil
- 32: Elektroleitung
- 33: Druckluftleitung
- 34: Elektroleitung
- 35: Speichereinheit
- 36: Kompressoreinheit
- 37: Außenschlauch
- 38: leitfähige Folien
- 39: Innenschlauch
- 40: Rückschlagventil
- 41: Druckluftleitung
- 42: Druckluftleitung
- 43: Spülventil

## Patentansprüche

1. Dezentrale geschlossene Niveauregelanlage für Fahrzeuge, insbesondere Kraftfahrzeuge, mit wenigstens einer Druckmittelkammer, einem Kompressor und einem Druckluftspeicher, wobei der Kompressor (19) ausschließlich in den Druckluftspeicher (12) fördert und die Zufuhr von Druckluft in die Druckmittelkammer (2) ausschließlich über den Druckluftspeicher (12) erfolgt, wobei
- die Anlage eine Regeleinheit (1) aufweist, die direkt an der Druckmittelkammer (2) montiert ist und mit einem Eingang (E) derart ausgebildet ist, daß sie Druckmittel zumindest vom Eingang (E) zur Druckmittelkammer (2) regeln kann, und
- eine von dem Druckluftspeicher (12) mit herrschendem Druck P1 ausgehende Energieleitung (22) über ein Speicherventil (10) und den Eingang (E) mit herrschendem Druck P2 mit der Regeleinheit (1) zumindest dann verbunden ist, wenn Luft aus dem Druckluftspeicher (12) mittels der Regeleinheit (1) in der Druckmittelkammer (2) mit herrschendem Druck P3 über ein Steuerventil (6) zugeführt werden soll, und
- eine von d er Druckmittelkammer (2) ausgehende Druckmittelleitung über ein Halte- und/oder Steuerventil zumindest dann mit dem Kompressor verbunden ist, wenn Druckmittel aus der Druckmittelkammer (2) über eine erste Druckluftleitung und ein Ansaugventil (20, 20a) durch eine zweite Druckmittelleitung zum Kompressor (19) zugeführt wird, und
- mindestens eine Busstation (7) über die Energieleitung (22) und eine Busleitung mit einer elektronischen Steuerung (8) verbunden ist, wobei die Busstation (7) geeignet ist,
- einerseits aus für die angeschlossene elektronische Steuerung (8) bestimmten seriellen Bussignalen Betätigungssignale zu erzeugen, die an die betreffende Regeleinheit (1) ausgegeben werden und
- andererseits von der Regeleinheit (1) eingehende Sensorsignale für die elektronische Steuerung (8) bestimmter serieller Bussignale zu erzeugen,
**dadurch gekennzeichnet,**
- **dass** die Regeleinheit (1) mit dem Eingang (E) mindestens ein Steuerventil (6), ein Druckhalteventil (5), einen Drucksensor (4), einen Höhensensor (3) und eine Busstation (7) aufweist, die mit dem Druckmittelspeicher (12) über das Speicherventil (10) und die Energieleitung (22) mit dem Eingang (E) der Regeleinheit (1) verbunden werden soll, wobei das Steuerventil (6) und das Druckhalteventil (5) sich dann in einem ersten Schaltzustand befinden, und
- **dass** der Druckmittelspeicher (12) über das Speicherventil (10) und die Energieleitung (22) mit dem Eingang (E) der Regeleinheit (1) und der Druckmittelkammer (2) verbunden ist, wobei sich das Druckhalteventil (5) in einem zweiten Schaltzustand befindet, und daß die Druckmittelkammer (2) mit der Druckmittelleitung (27) und der Regeleinheit (1) mindestens dann verbunden sein soll, wobei sich das Druckhalteventil (5) und das Steuerventil (6) in dem zweiten Schaltzustand befinden.

2. Anlage nach Anspruch 1, **dadurch gekennzeichnet,**
- **dass** eine von der Druckmittelkammer (2) ausgehende Druckmittelleitung über ein Halteventil (5) und ein Steuerventil (6) über die Energieleitung (22) mit dem Druckluftspeicher (12) verbunden ist.

3. Anlage nach Anspruch 1 oder 2, **dadurch gekennzeichnet,**
- **dass** ein Drucklufttrockner (16) zwischen Kompressor (19) und Druckluftspeicher (12) angeordnet ist, und daß eine Ansaugleitung vorhanden ist, die in einem Ansaugventil (20) endet und über das Umschaltventil (17) mit der Atmosphäre verbunden ist, und
- **dass** eine Ablassleitung vorhanden ist, die über die Energieleitung (22) kommend, über Rückschlagventil (18), Druckluftleitung (33), Umschaltventil (17), Druckluftleitung (25) führt und im Ansaugventil endet, so daß der Druckluftspeicher (12) oder die Druckmittelkammer (2) über den Drucklufttrockner (16) und über den Ansaugfilter (21) mit der Atmosphäre verbunden ist.

4. Anlage nach Anspruch 1 bis 3, mit einer ersten Druckluftringleitung, bestehend aus der Energieleitung (22) und der Druckluftleitung (33) vom Speicherventil (10) bis zum Rückschlagventil (18), **dadurch gekennzeichnet,**
- **dass** sich die erste Druckluft-Ringleitung bei einem ersten eingestellten Druck auf das Speicherventil (10) und den Drucksensor (9) in einem ersten Zustand befindet, und dass sich eine zweite Ringleitung, bestehend aus Energieleitung (22), Druckluftleitung (33), Druckluftleitung (25) und Druckluftleitung (27) durch Einschalten des Umschaltventils (17) in Verbindung zum Steuerventil (6) in dem zweiten Schaltzustand befindet.

5. Anlage nach Anspruch 1 bis 4 **dadurch gekennzeichnet, dass** dem Umschaltventil (17), dem Speicherventil (10) und dem Hauptventil (29) ein Druckbegrenzungsventil (11) vorgeschaltet ist.

6. Anlage nach Anspruch 1 bis 5, **dadurch gekennzeichnet, dass** die Regeleinheit (1a) bestehend aus dem Hauptventil (29), einem Pilotventil (30), einem entsperrbaren Rückschlagventil (28), einem Drucksensor (4a), einem Höhensensor (3), einem Druckbegrenzungsventil (11b) und einer Busstation (7) über die Energieleitung (22) und ein einstellbares Druck- und Speicherventil (10) versorgt wird und über Strom- und Signalleitungen (38, 38a und 38b) mit der Steuereinheit (8a) verbindbar ausgebildet ist.

7. Anlage nach Anspruch 1 bis 6, **dadurch gekennzeichnet**, d ass unabhängig vom Netzluftdruck, welcher am Eingang (E) der Regeleinheit (1a) ansteht, über das Druckbegrenzungsventil (11 b) immer der gleiche Steuerdruck am Hauptventil (29) und am Pilotventil (30) herrscht.

8. Anlage nach Anspruch 1 bis 7, **dadurch gekennzeichnet, dass** die Anlage, bestehend aus Kompressoreinheit (36), Speichereinheit (35) und Regeleinheit (1 und 1a) mit der Energieleitung (22) und Druckluftleitungen (33, 27, 37) verbindbar ausgebildet ist.

9. Anlage nach Anspruch 1, **dadurch gekennzeichnet, dass** eine von der Druckmittelkammer (2) ausgehende Druckmittelleitung über ein direkt gesteuertes 2/2 Resthalteventil (5a) über die Energieleitung (22) mit Speichereinheit (35) bzw. mit dem Druckluftspeicher (12) verbunden ist.

10. Anlage nach Anspruch 9, **dadurch gekennzeichnet, dass** eine Regeleinheit (1b) bestehend aus einem 2/2-Druckhalteventil (5a), einem Drucksenor (4), einem Höhensensor (3) und einer Busstation (7) als Einheit ausgebildet ist.

11. Anlage nach einem der vorhergehenden Ansprüche, **dadurch gekennzeichnet, dass** sie eine Energieleitung (22), bestehend aus einem Innenschlauch (39), einem Außenschlauch (37) und einer Stromleitung (38, 38a und 38b) aufweist.

## Claims

1. A decentralized vehicular self-levelling suspension system, particularly for motor vehicles, comprising at least one compressed fluid chamber, a compressor and a compressed air reservoir, the compressor (19) delivering exclusively to the compressed air reservoir (12) and the supply of compressed air to the compressed fluid chamber (2) is made exclusively via the compressed air reservoir (12), wherein
- the system comprises a feedback controller (1) mounted directly on the compressed fluid chamber (2) and configured with an inlet (E) such that it permits feedback control of the compressed fluid at least from the inlet (E) to the compressed fluid chamber (2) and
- a power line (22) starting from the compressed air reservoir (12) with a pressure P1 is connected via a reservoir valve (10) and the inlet (E) with a pressure P2 is connected to the feedback controller (1) at least then when air is to be supplied from the compressed air reservoir (12) by means of the feedback controller (1) into the compressed fluid chamber (2) at pressure P3 via a control valve (6), and
- a compressed fluid line starting from the compressed fluid chamber (2) is connected via a valve for maintaining and/or controlling the pressure to the compressor (19) when compressed fluid is supplied from the compressed fluid chamber (2) via a first compressed air line and a suction valve (20, 20a) through a second compressed fluid line to the compressor (19) and
- at least one bus station (7) is connected via the power line (22) and a bus line to an electronic controller (8), the bus station (7) being suitable
- on the one hand to generate from serial bus signals intended for the connected electronic controller (8) actuating signals output to the corresponding feedback controller (1) and
- on the other, to generate sensor signals inlet in the feedback controller (1) for the electronic controller (8) of certain serial bus signals,
**characterized in that**
- the feedback controller (1) with the inlet (E) comprises at least one control valve (6), a pressure maintenance valve (5), a pressure sensor (4), a level sensor (3) and a bus station (7) to be connected to the compressed air reservoir (12) via the reservoir valve (10) and the power line (22) to the inlet (E) of the feedback controller (1), the control valve (6) and pressure maintenance valve (5) then being in a first switched condition and
- the compressed fluid reservoir (12) is connected via the reservoir valve (10) and the power line (22) to the inlet (E) of the feedback controller (1) and the compressed fluid chamber (2), the pressure maintenance valve (5) being in a second switched condition and that the compressed fluid chamber (2) is to be connected to the compressed air line (27) and the feedback controller (1) at least then when the pressure maintenance valve (5) and the control valve (6) are in the second switched condition.

2. The system as set forth in claim 1, **characterized in that**
- a compressed fluid line starting from the compressed fluid chamber (2) is connected via a pressure maintenance valve (5) and a control valve (6) via the power line (22) to the compressed air reservoir (12).

3. The system as set forth in claim 1 or 2, **characterized in that**
- a compressed air dryer (16) is disposed between the compressor (19) and the compressed air reservoir (12) and that a suction line is provided ending in a suction valve (20) and connected to the atmosphere via the selector valve (17) and that
- a drain line is provided coming via the power line (22) through check valve (18), compressed air line (33), selector valve (17), compressed air line (25) and ending in the suction valve so that the compressed air reservoir (12) or compressed fluid chamber (2) is connected to the atmosphere via the compressed air dryer (16) and via the suction filter (21).

4. The system as set forth in any of the claims 1 to 3 featuring a first compressed air ring line comprising the power line (22) and the compressed air line (33) from the reservoir valve (10) to the check valve (18), **characterized in that**
- the first compressed air ring line at a first set pressure at the reservoir valve (10) and pressure sensor (9) is in a first condition and that a second compressed air ring line comprising power line (22), compressed air line (33), compressed air line (25) and compressed air line (27) is in the second switched condition when the selector valve (17) is activated in conjunction with the control valve (6).

5. The system as set forth in any of the claims 1 to 4, **characterized in that** upstream of the selector valve (17), reservoir valve (10) and main valve (29) a relief valve (11) is provided.

6. The system as set forth in any of the claims 1 to 5, **characterized in that** the feedback controller (1a) comprising the main valve (29), a pilot valve (30), a releasable check valve (28), a pressure sensor (4a), a level sensor (3), a pressure relief valve (11b) and a bus station (7) is supplied via the power line (22) and an adjustable pressure and reservoir valve (10) and is configured for connection to the controller unit (8a) via power and signal lines (38, 38a and 38b).

7. The system as set forth in any of the claims 1 to 6, **characterized in that** irrespective of the vehicular system air pressure available at the inlet (E) of the feedback controller (1a) always the same control pressure exists at the main valve (29) and pilot valve (30) via the pressure relief valve (11b).

8. The system as set forth in any of the claims 1 to 7, **characterized in that** the system comprising compressor unit (36), reservoir unit (35) and feedback controller (1 and 1a) is configured for connection to the power line (22) and compressed air lines (33, 27, 37).

9. The system as set forth in claim 1, **characterized in that** a compressed fluid line starting from the compressed fluid chamber (2) is connected via a direct controlled 2/2 remaining pressure maintenance valve (5a) via the power line (22) to the reservoir unit (35) and compressed air reservoir (12) respectively.

10. The system as set forth in claim 9, **characterized in that** a feedback controller (1b) comprising a 2/2 pressure maintenance valve (5a), a pressure sensor (4), a level sensor (3) and a bus station (7) is configured as a unit.

11. The system as set forth in any of the preceding claims, **characterized in that** it comprises a power line (22) consisting of an inner flexible tube (39), an outer flexible tube (37) and a power line (38, 38a and 38b).

## Revendications

1. Dispositif de régulation de niveau fermé décentralisé pour véhicules, notamment véhicules automobiles, comportant au moins une chambre de fluide de pression, un compresseur et un réservoir d'air comprimé, le compresseur (19) débitant exclusivement dans le réservoir d'air comprimé (12) et l'amenée d'air comprimé dans la chambre de fluide de pression (2) se faisant exclusivement par l'intermédiaire du réservoir d'air comprimé (12),
- le dispositif présentant une unité de régulation (1) qui est directement montée sur la chambre de fluide de pression (2) et qui est formé avec une entrée (E) de manière à ce qu'il puisse régler le fluide de pression du moins de l'entrée (E) à la chambre de fluide de pression (2), et
- une conduite d'énergie (22) partant du réservoir d'air comprimé (12) présentant une pression régnante P1 étant reliée par l'intermédiaire d'une soupape de réservoir (10) et de l'entrée (E) présentant une pression régnante P2 à l'unité de régulation (1) au moins lorsque de l'air provenant du réservoir d'air comprimé (12) devant être acheminé au moyen de l'unité de régulation (1) dans la chambre de fluide de pression (2) présentant une pression régnante P3 par l'intermédiaire d'une soupape de régulation (6), et
- une conduite de fluide de pression partant de la chambre de fluide de pression (2) étant reliée au compresseur par l'intermédiaire d'une soupape de retenue et/ou de commande au moins lorsque du fluide de pression est acheminé au compresseur (19) à partir de la chambre de fluide de pression (2) par l'intermédiaire d'une première conduite d'air comprimé et d'une soupape d'aspiration (20, 20a) à travers une seconde conduite de fluide de pression, et
- au moins une station bus (7) étant reliée par l'intermédiaire de la conduite d'énergie (22) et d'une conduite bus à une commande électronique (8), la station bus (7) étant adapté,
- à produire d'une part des signaux d'actionnement à partir des signaux bus sériels destinés à la commande électronique (8) raccordée, qui sont émis à destination de l'unité de régulation (1) correspondante et
- à produire d'autre part des signaux de capteurs venant de l'unité de régulation (1) pour la commande électronique (8) de signaux bus sériels déterminés,
**caractérisé en ce que**
- l'unité de régulation (1) présente avec l'entrée (E) au moins une soupape de commande (6), une soupape de maintien de la pression (5), un capteur de la pression (4), un capteur de la hauteur (3) et une station bus (7) qui doit être raccordée au réservoir de fluide de pression (12) par l'intermédiaire de la soupape de réservoir (10) et de la conduite d'énergie (22) à l'entrée (E) de l'unité de régulation (1), la soupape de commande (6) et la soupape de maintien de la pression (5) se trouvant alors dans un premier état de commutation et
- que le réservoir de fluide de pression (12) est raccordé par l'intermédiaire de la soupape de réservoir (10) et de la conduite d'énergie (22) à l'entrée (E) de l'unité de régulation (1) et à la chambre de fluide de pression (2), la soupape de maintien de la pression (5) se trouvant dans un second état de commutation, et que la chambre de fluide de pression (2) doit être raccordée à la conduite de fluide de pression (27) et à l'unité de régulation (1) au moins lorsque la soupape de maintien de la pression (5) et la soupape de commande (6) se trouvent dans le second état de commutation.

2. Dispositif selon la revendication 1, **caractérisé en ce que**
- une conduite de fluide de pression partant de la chambre de fluide de pression (2) est reliée au réservoir d'air comprimé (12) par l'intermédiaire d'une soupape de retenue (5) et d'une soupape de commande (6) par l'intermédiaire de la conduite d'énergie (22).

3. Dispositif selon les revendications 1 ou 2, **caractérisé en ce que**
- un dessiccateur d'air comprimé (16) est disposé entre le compresseur (19) et le réservoir d'air comprimé (12) et qu'une conduite d'aspiration est prévue qui se termine dans une soupape d'aspiration (20) et qui est reliée à l'atmosphère par l'intermédiaire de la soupape de commutation (17) et
- qu'une conduite d'échappement est prévue qui venant de la conduite d'énergie (22) passe par la soupape de non-retour (18), la conduite d'air comprimé (33), la soupape de commutation (17), la conduite d'air comprimé (25) et se termine dans la soupape d'aspiration de sorte que le réservoir d'air comprimé (12) ou la chambre de fluide de pression (22) est relié(e) par l'intermédiaire du dessiccateur d'air comprimé (16) et du filtre d'aspiration (21) à l'atmosphère.

4. Dispositif selon les revendications 1 à 3, comportant une première conduite annulaire d'air comprimé consistant dans la conduite d'énergie (22) et la conduite d'air comprimé (33) de la soupape de réservoir (10) à la soupape de non-retour (18), **caractérisé en ce que**
- la première conduite annulaire d'air comprimé se trouve dans un premier état lorsqu'une première pression réglée agit sur la soupape de réservoir (10) et le capteur de la pression (9), et qu'une seconde conduite annulaire consistant en une conduite d'énergie (22), une conduite d'air comprimé (33), une conduite d'air comprimé (25) et une conduite d'air comprimé (27) se trouve dans le second état de commutation par l'enclenchement de la soupape de commutation (17) en combinaison avec la soupape de commande (6).

5. Dispositif selon les revendications 1 à 4, **caractérisé en ce qu'**une soupape de limitation de la pression (11) est placée en amont de la soupape de commutation (17), de la soupape de réservoir (10) et de la soupape principale (29).

6. Dispositif selon les revendications 1 à 5, **caractérisé en ce que** l'unité de régulation (1a) consistant dans la soupape principale (29), une soupape pilote (30), une soupape de retenue (28) déverrouillable, un capteur de la pression (4a), un capteur de la hauteur (3), une soupape de limitation de la pression (11b) et une station bus (7) est alimentée par l'intermédiaire de la conduite d'énergie (22) et d'une soupape de pression et de réservoir (10) réglable et est formée pour pouvoir être raccordée par l'intermédiaire de conduites de courant et de signaux (38, 38a et 38b) à l'unité de commande (8a).

7. Dispositif selon les revendications 1 à 6, **caractérisé en ce qu'**indépendamment de la pression d'air du réseau présente à l'entrée (E) de l'unité de régulation (1a), la même pression de commande règne toujours à la soupape principale (29) et à la soupape pilote (30) moyennant la soupape de limitation de la pression (11b).

8. Dispositif selon les revendications 1 à 7, **caractérisé en ce que** le dispositif consistant en unité de compresseur (36), unité de réservoir (35) et unité de régulation (1 et 1a) est formé de manière à pouvoir être raccordé à la conduite d'énergie (22) et à des conduites d'air comprimé (33, 27, 37).

9. Dispositif selon la revendication 1, **caractérisé en ce qu'**une conduite de fluide de pression partant de la chambre de fluide de pression (2) est raccordée à l'unité de réservoir (35) et au réservoir d'air comprimé (12) moyennant une soupape de retenue résiduelle 2/2 à commande directe (5a) par l'intermédiaire de la conduite d'énergie (22).

10. Dispositif selon la revendication 9, **caractérisé en ce que** l'unité de régulation (1b) consistant en une soupape de maintien de la pression 2/2 (5a), un capteur de la pression (4), un capteur de la hauteur (3) et une station bus (7) est formée comme unité.

11. Dispositif selon l'une quelconque des revendications précédentes, **caractérisé en ce qu'**il présente une conduite d'énergie (22), consistant en un tuyau intérieur (39), un tuyau extérieur (37) et une conduite de courant (38, 38a et 38b).
